# EUROPÄISCHE PATENTSCHRIFT

(11) **EP 2 189 097 B1**
(45) Veröffentlichungstag und Bekanntmachung des Hinweises auf die Patenterteilung: **16.12.2015**
(21) Anmeldenummer: 09014269.6
(22) Anmeldetag: 16.11.2009
(51) Int. Cl.: A47L 11/08, A47L 11/164, A47L 11/40, F16D 1/112, B24B 7/18

(54) **Vorrichtung für Pflegescheiben**
Device for floor care discs
Dispositif pour disques d'entretien

(30) Priorität: 25.11.2008 DE 102008060099
(43) Veröffentlichungstag der Anmeldung: 26.05.2010
(73) Patentinhaber: Stein & Co. GmbH, 42553 Velbert (DE)
(72) Erfinder: Stein, Klaus, 42553 Velbert (DE); Boll, Hartmut, 42555 Velbert (DE)
(74) Vertreter: Marschall, Stefan

(56) Entgegenhaltungen:
- WO-A2-01/98029
- DE-A1- 4 215 802
- DE-U1- 8 617 171
- GB-A- 746 802

## Beschreibung

Die Erfindung bezieht sich auf eine Vorrichtung zur lösbaren Verbindung von Antriebselementen mit Pflegescheiben als rotierend treibbare Treibteller für Wirkbeläge, wie sogenannte Pads, für Bodenpflegegeräte, wie Polier- oder Bohnermaschinen, wobei das Antriebselement eine Aufnahme mit einem Halteflansch aufweist, auf die der Treibteller über eine Aufnahmeöffnung aufsetzbar und über ein Sicherungselement festsetzbar ist.

Bei derartigen Ausbildungen bestehen spezielle Anforderungen, um eine sichere Zentrierung durch eine Befestigung zur Vermeidung von Unwuchten und Verschiebungen zu gewährleisten. Bei bekannten Sicherungsmuttern besteht der Mangel, daß oftmals eine Montage bzw. Demontage ohne zusätzliches Werkzeug bzw. Kraftaufwand nicht durchführbar und von wenig geschultem Personal nicht handhabbar ist. Auch bei anderen Schraubverbindungen besteht die Gefahr, daß keine ordnungsgemäße Verbindung hergestellt wird.

Druckschriftlicher Stand der Technik ist aus der DE 86 17 171 U1 bekannt.

Die Aufgabe der Erfindung ist es, eine einfache Vorrichtung zur lösbaren Befestigung von Pflegescheiben zu schaffen, die eine formschlüssige rotatorische Kraftübertragung ermöglicht und eine sichere Zentrierung gewährleistet sowie eine Handhabung durch wenig geschultes Personal erlaubt und bei Fehlbedienung eine entsprechende Sicherheit gewährleistet.

Die Lösung dieser Aufgabe erfolgt erfindungsgemäß dadurch, daß die Aufnahmeöffnung des Treibtellers Ausschnitte aufweist, in die korrespondierende Elemente der Aufnahme in aufgesetzter Position des Treibtellers als Mitnehmer eingreifen und das aufgesetzte Sicherungselement mit einer Haltefläche auf eine zugeordnete Fläche des Treibtellers aufsetzbar ist, wobei das Sicherungselement einen Kragen aufweist, der in die Aufnahme der Antriebsachse eingreift und der Kragen mehrere Haltestege trägt, die beim Verdrehen des Sicherungselementes zur Festsetzung des Treibtellers in korrespondierende Taschen der Aufnahme, wie ein Bajonettverschluß, eingreifen.

Durch die Zuordnung von Ausschnitten im Randbereich der Öffnung des Treibtellers und radial angeordneten Elementen der Aufnahme erfolgt eine Zentrierung und eine formschlüssige rotatorische Kraftübertragung von der Antriebsachse zum Treibteller, wobei die Befestigung des Sicherungselementes in einfacher Weise über eine Verdrehung und eine Fixierung durch einen Bajonettverschluß erfolgt.

Eine einfache Ausbildung zur Ver- und Entriegelung des Sicherungselementes besteht daran, daß das Sicherungselement in einer Vertiefung des Treibtellers aufgenommen ist und im Mantelbereich der Vertiefung Rastnocken angeordnet sind, die mit zugeordneten Haltenocken am Umfang des Sicherungselementes korrespondieren und in der Verriegelungsstellung im Eingriff stehen, wobei die Haltenocken an federnd gelagerten Betätigungsarmen angeordnet sind.

Zur Erleichterung einer Handhabung des Sicherungselementes ist vorgesehen, daß die Betätigungsarme Fingermulden zur Handhabung aufweisen.

Eine vorteilhafte Ausführungsform besteht darin, daß die Aufnahme über den Umfang verteilte federbelastete Sicherungsstifte aufweist, die den aufsetzbaren Treibteller oberhalb der Antriebsposition halten und nach Zurückführen der Sicherungsstifte der Treibteller mit der Aufnahme im Eingriff bringbar ist.

Ferner wird vorgeschlagen, daß der Treibteller und das Sicherungselement zugeordnete Kennungen beim Erreichen der verriegelungsposition aufweisen.

Eine vorteilhafte Ausbildung besteht darin, daß ein freier mittlerer Bereich im Sicherungselement zur Aufnahme einer Laufrolle gebildet ist.

Ein Ausführungsbeispiel der Erfindung ist in den Zeichnungen schematisch dargestellt. Es zeigen:

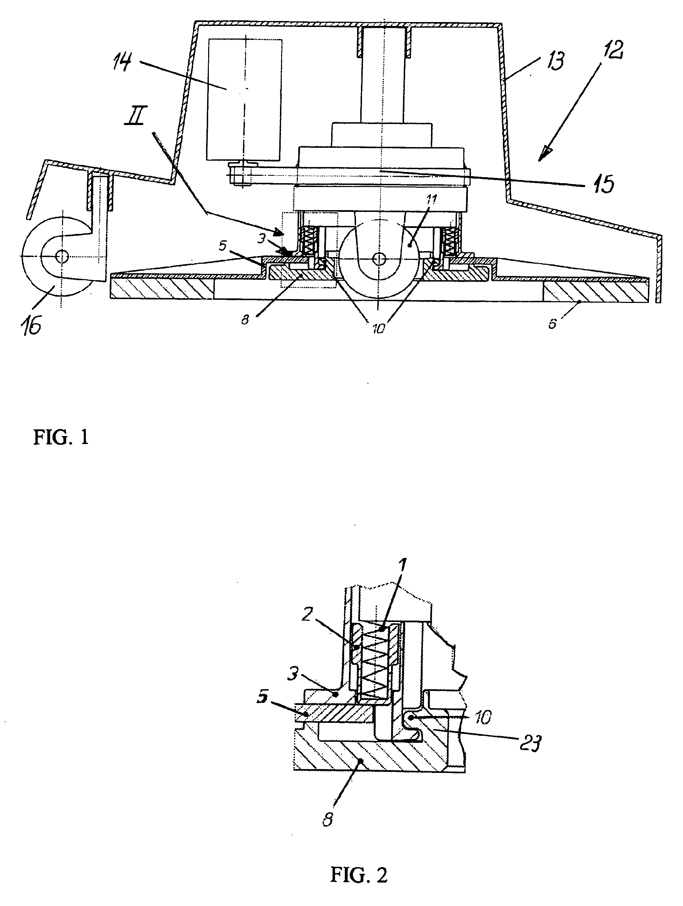

- Fig. 1: einen Schnitt durch eine Bohnermaschine mit montiertem Treibteller;
- Fig. 2: einen vergrößerten Ausschnitt II der Fig. 1 mit verriegelungselementen und Zuordnung von federbelasteten Sicherungsstiften;

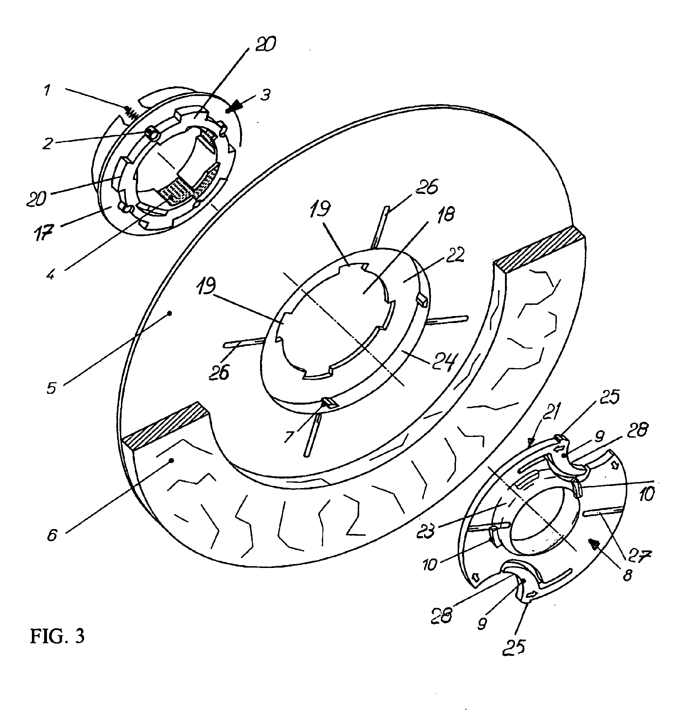

- Fig. 3: eine Explosivdarstellung der zugeordneten Teile und

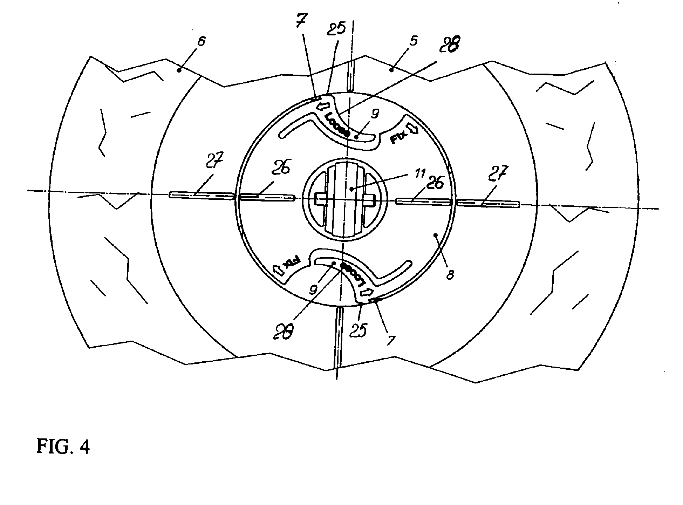

- Fig. 4: eine Draufsicht auf ein montiertes Sicherungselement

Bei der dargestellten Anordnung ist eine Bohnermaschine 12 gezeigt, die ein Gehäuse 13 mit einem Antriebsmotor 14 und einem Antriebselement 15 aufweist sowie eine Pflegescheibe als Treibteller 5 für einen Reinigungsbelag als Pad 6 trägt. Die Anordnung ist über zugeordnete Laufrollen 11 und 16 am Boden verfahrbar abstützbar.

Das Antriebselement 15 wird durch eine Aufnahme 3 für den Treibteller 5 gebildet, die als Gegenlager einen Halteflansch 17 aufweist. Zum Antrieb des Treibtellers 5 wird dieser über seine Aufnahmeöffnung 18 zur Anlage auf dem Halteflansch 17 der Aufnahme 3 aufgesetzt, wobei Ausschnitte 19 der Aufnahmeöffnung 18 mit korrespondierenden Elementen als Mitnehmer 20 der Aufnahme 3 in Eingriff gebracht werden.

In diesem Fall sind im Aufsetzbereich des Treibtellers 5 durch Druckfedern 1 belastete Sicherungsstifte 2 angeordnet, die beim Aufsetzen des Treibtellers 5 zurückgeführt werden müssen, um die Ausschnitte 19 mit den Mitnehmern 20 in Eingriff zu bringen.

In dieser Eingriffslage wird das Sicherungselement 8 mit seiner Haltefläche 21 einer Fläche 22 des Treibtellers zugeordnet und mit seinem Kragen 23 in die Öffnung der Aufnahme 3 eingesetzt. Der Kragen 23 besitzt hierbei mehrere Haltestege 10, die beim Verdrehen des Sicherungselementes 8 zum Festsetzen des Treibtellers 5 in korrespondierende Taschen 4 der Aufnahme 3 als Bajonettverschluß eingreifen.

In dieser Ausbildung ist die Fläche 22 des Treibtellers 5 vertieft angeordnet, so daß sich ein Mantelbereich 24 bildet. Im Mantelbereich 24 der Vertiefung sind Rastnocken 7 angeordnet, die mit zugeordneten Haltenocken 25 am Umfang des Sicherungselementes 8 korrespondieren und in der Verriegelungsstellung des Sicherungselementes 8 miteinander in Eingriff stehen. Diese Verriegelungsstellung ist durch übereinstimmende Kennungen 26, 27 an Sicherungselement 8 und an der Treibscheibe 5 gekennzeichnet.

Die Haltenocken 25 sind dabei an federnd gelagerten Betätigungsarmen 9 angeordnet und es kann somit die Verriegelung entsprechend durch eine Betätigung der Betätigungsarme 9 gegen die Federwirkung und Verdrehen des Sicherungselementes 8 wieder aufgehoben werden. Hierbei sind Fingermulden 28 im Bereich der Betätigungsarme 9 zur Handhabung des Sicherungselementes 8 angeordnet.

In dieser Ausführung besitzt das Sicherungselement 8 einen freien mittleren Bereich zur Durchdringung der Laufrolle 11.

## Patentansprüche

1. Vorrichtung zur lösbaren Verbindung von Antriebselementen (15) mit Pflegescheiben als rotierend treibbare Treibteller (5) für Wirkbeläge, wie sogenannte Pads (6), für Bodenpflegegeräte, wie Polier- oder Bohnermaschinen (12), wobei das Antriebselement (15) eine Aufnahme (3) mit einem Halteflansch (17) aufweist, auf die der Treibteller (5) über eine Aufnahmeöffnung (18) aufsetzbar und über ein Sicherungselement (8) festsetzbar ist, **dadurch gekennzeichnet, daß** die Aufnahmeöffnung (18) des Treibtellers (5) Ausschnitte (19) aufweist, in die korrespondierende Elemente (20) der Aufnahme (3) in aufgesetzter Position des Treibtellers (5) als Mitnehmer eingreifen und das aufgesetzte Sicherungselement (8) mit einer Haltefläche (21) auf eine zugeordnete Fläche (22) des Treibtellers (5) aufsetzbar ist, wobei das Sicherungselement (8) einen Kragen (23) aufweist, der in die Aufnahme (3) der Antriebsachse (15) eingreift und der Kragen (23) mehrere Haltestege (10) trägt, die beim Verdrehen des Sicherungselementes (8) zur Festsetzung des Treibtellers (5) in korrespondierende Taschen (4) der Aufnahme (3), wie ein Bajonettverschluß, eingreifen.

2. Vorrichtung nach Anspruch 1, **dadurch gekennzeichnet, daß** das Sicherungselement (8) in einer Vertiefung des Treibtellers (5) aufgenommen ist und im Mantelbereich (24) der Vertiefung Rastnocken (7) angeordnet sind, die mit zugeordneten Haltenocken (25) am Umfang des Sicherungselementes (8) korrespondieren und in der Verriegelungsstellung im Eingriff stehen, wobei die Haltenocken (25) an federnd gelagerten Betätigungsarmen (9) angeordnet sind.

3. Vorrichtung nach Anspruch 2, **dadurch gekennzeichnet, daß** die Betätigungsarme (9) Fingermulden (28) zur Handhabung aufweisen.

4. Vorrichtung nach einem der Ansprüche 1 bis 3, **dadurch gekennzeichnet, daß** die Aufnahme (3) über den Umfang verteilte federbelastete Sicherungsstifte (2) aufweist, die den aufsetzbaren Treibteller (5) oberhalb der Antriebsposition halten und nach Zurückführen der Sicherungsstifte (2) der Treibteller (5) mit der Aufnahme (3) im Eingriff bringbar ist.

5. Vorrichtung nach einem der Ansprüche 1 bis 4, **dadurch gekennzeichnet, daß** der Treibteller (5) und das Sicherungselement (8) zugeordnete Kennungen (26, 27) beim Erreichen der Verriegelungsposition aufweisen.

6. Vorrichtung nach einem der Ansprüche 1 bis 5, **dadurch gekennzeichnet, daß** ein freier mittlerer Bereich im Sicherungselement (8) zur Aufnahme einer Laufrolle (11) gebildet ist.

## Claims

1. A device for releasably connecting drive elements (15) to maintenance pads as rotatingly drivable pad holders (5) for active pads, such as so-called pads (6), for floor cleaning devices, such as polishing or floor polishing machines (12), wherein the drive element (15) has a receptacle (3) comprising a holding flange (17), to which the pad holders (5) can be attached via a receiving opening (18) and can be fixed via a securing element (8), **characterized in that** the receiving opening (18) of the pad holder (5) has cutouts (19), with which corresponding elements (20) of the receptacle (3) engage in attached position of the pad holder (5) as actuator and the attached securing element (8) can be attached to an assigned surface (22) of the pad holder (5) with a holding surface (21), wherein the securing element (8) has a collar (23), which engages with the receptacle (3) of the drive axle (15) and the collar (23) supports a plurality of holding bars (10), which engage with corresponding pockets (4) of the receptacle (3) in the manner of a bayonet closure in response to a rotation of the securing element (8) so as to fix the pad holder (5).

2. The device according to claim 1, **characterized in that** the securing element (8) is received in a depression of the pad holder (5) and latching cams (7) are arranged in the jacket area (24) of the depression, which correspond to assigned holding cams (25) on the circumference of the securing element (8) and which are engaged in the locked position, wherein the holding cams (25) are arranged on actuating arms (9), which are supported in a spring-loaded manner.

3. The device according to claim 2, **characterized in that** the actuating arms (9) have finger grooves (28) for handling purposes.

4. The device according to one of claims 1 to 3, **characterized in that** the receptacle (3) has spring-loaded securing pins (2) distributed across the circumference, which hold the attachable pad holder (5) above the drive position and which can be engaged with the receptacle (3) after returning the securing pins (2) of the pad holders (5).

5. The device according to one of claims 1 to 4, **characterized in that** the pad holder (5) and the securing element (8) have assigned identifiers (26, 27) when reaching the locked position.

6. The device according to one of claims 1 to 5, **characterized in that** a free central area is formed in the securing element (8) for receiving a roller (11).

## Revendications

1. Dispositif pour l'assemblage amovible d'éléments d'entraînement (15) avec des disques d'entretien en tant que plateau d'entraînement (5) susceptible d'être entraîné en rotation pour des garnitures actives, telles que des dénommés coussinets (6) pour des appareils d'entretien du sol, tels que des polisseuses ou des cireuses (12), l'élément d'entraînement (15) comportant un logement (3) avec une bride de retenue (17) sur laquelle on peut placer le plateau d'entraînement (5) par l'intermédiaire d'une ouverture de logement (18) et on peut l'immobiliser par l'intermédiaire d'un élément de blocage (8), **caractérisé en ce que** l'ouverture de logement (18) du plateau d'entraînement (5) comporte des découpes (19) dans lesquelles, en position montée du plateau d'entraînement (5), des éléments (20) correspondants du logement (3) s'engagent en tant qu'entraîneurs et l'élément de blocage (8) monté peut être placé par une surface de retenue (21) sur une surface (22) associée du plateau d'entraînement (5), l'élément de blocage (8) comportant un collet (23) qui s'engage dans le logement (3) de l'axe d'entraînement (15) et la collerette (23) portant plusieurs barrettes de retenue (10), qui lors d'une rotation de l'élément de blocage (8) s'engagent dans des poches (4) correspondantes du logement (3), comme une fermeture à baïonnette, pour immobiliser le plateau d'entraînement (5).

2. Dispositif selon la revendication 1, **caractérisé en ce que** l'élément de blocage (8) est logé dans un creux du plateau d'entraînement (5) et dans la zone d'enveloppe (24) du creux sont placées des cames d'enclenchement (7) qui correspondent avec des cames de retenue (25) associées sur la périphérie de l'élément de blocage (8) et qui sont engagées dans la position de verrouillage, les cames de retenue (25) étant placées sur des bras de manoeuvre (9) logés de manière élastique.

3. Dispositif selon la revendication 2, **caractérisé en ce que** les bras de manoeuvre (9) comportent des cavités pour doigts (28) pour la manipulation.

4. Dispositif selon l'une quelconque des revendications 1 à 3, **caractérisé en ce que** le logement (3) comporte des tiges de blocage (2) contraintes par ressort distribuées sur la périphérie, qui retiennent le plateau d'entraînement (5) qui peut être monté au-dessus de la position d'entraînement et après retour des tiges de blocage (2), le plateau d'entraînement (5) peut être amené en engagement avec le logement (3).

5. Dispositif selon l'une quelconque des revendications 1 à 4, **caractérisé en ce que** le plateau d'entraînement (5) et l'élément de blocage (8) comportent des repères (26, 27) associés à l'atteinte de la position de verrouillage.

6. Dispositif selon l'une quelconque des revendications 1 à 5, **caractérisé en ce qu'**une zone centrale libre est formée dans l'élément de blocage (8) pour le logement d'un galet de roulement (11).
